# EUROPEAN PATENT APPLICATION

(11) **EP 4 683 199 A1**
(43) Date of publication of application: **21.01.2026**
(21) Application number: 25165093.3
(22) Date of filing: 20.03.2025
(51) Int. Cl.: H02M 1/42, H02M 3/00, H02M 7/217, H02M 3/335

(54) **RESONANT CONVERTER AND METHOD FOR PARAMETER CALCULATION THEREOF**

(30) Priority: 19.07.2024 IN 202411055361; 12.12.2024 CN 202411832392
(71) Applicant: DELTA ELECTRONICS, INC., Taoyuan City 320023 (TW)
(72) Inventor: ROY, Shamibrota Kishore, 560099 Bangalore, Karnataka (IN); NALAMASA, Ravali, 560099 Bangalore, Karnataka (IN); CHEN, Ying-Fan, 320023 Taoyuan City (TW)
(74) Representative: 2K Patentanwälte Blasberg Kewitz & Reichel

(57) **Abstract**

A method for parameter calculation of a resonant converter (100) includes steps of: (A) setting a predetermined operating condition of the resonant converter (100), and the predetermined operating condition includes a specific frequency range of an operating frequency (Fs) of the resonant converter (100), (B) calculating a plurality of first resonance parameters in the specific frequency range, (C) acquiring a first resonance parameter in which a current ripple (Q) of a resonant inductor (Lr1, Lr2) of the resonant converter (100) is a minimum value in the plurality of first resonance parameters, (D) calculating a plurality of second resonance parameters according to the turns ratio (n, N) of the first resonance parameter and the predetermined operating condition, and selecting one of the second resonance parameters as the resonance parameter.

## Description

### BACKGROUND

### Technical Field

The present disclosure relates to a resonant converter and a method for parameter calculation thereof, and more particularly to a resonant converter and a method for resonance parameter calculation thereof.

### Description of Related Art

The statements in this section merely provide background information related to the present disclosure and do not necessarily constitute prior art.

Dual active bridge (DAB) converters are commonly used in high-power power conversion applications and are suitable as battery charging converters due to their large adjustable voltage range. In particular, the conventional dual active bridge converter structure is usually in a fixed-frequency operating mode, and its circuit design is relatively simple. However, the dual active bridge converter can perform zero voltage switching (ZVS) operation when the switch controlled by a pulse width modulation signal is turned on, but it is hard switching when the switch is turned off, which will cause large current stress and larger switching loss when the switch is turned off.

On the other hand, in the circuit design of dual active bridge converters, existing formula derivation is usually used to design parameters. However, such a parameter design manner cannot optimize the acquired parameters, resulting in too high current ripple, thus causing the resonant circuit to be too large in size. In addition, unoptimized parameter design cannot enable the dual active bridge converter to have a better zero voltage switching (ZVS) range, resulting in an inability to effectively improve its efficiency.

Therefore, how to design a resonant converter and a method for parameter calculation thereof to utilize optimized processes and accurate analysis to acquire better resonance parameters has become a critical topic in this field.

### SUMMARY

In order to solve the above-mentioned problems, the present disclosure provides a method for parameter calculation of a resonant converter to acquire a resonance parameter of the resonant converter. The method includes steps of: (A) setting a predetermined operating condition of the resonant converter, wherein the predetermined operating condition comprises a specific frequency range of an operating frequency of the resonant converter, (B) calculating a plurality of first resonance parameters in the specific frequency range, wherein the plurality of first resonance parameters comprise a turns ratio of a transformer of the resonant converter, (C) acquiring a first resonance parameter in which a current ripple of a resonant inductor of the resonant converter is a minimum value in the plurality of first resonance parameters, and (D) calculating a plurality of second resonance parameters according to the turns ratio of the first resonance parameter and the predetermined operating condition, and selecting one of the second resonance parameters as the resonance parameter.

In order to solve the above-mentioned problems, the present disclosure provides a resonant converter. The resonant converter includes a primary-side circuit, a resonant circuit, and a secondary-side circuit. The primary-side circuit is coupled to a DC power source. The resonant circuit includes a plurality of transformers, a plurality of primary-side windings of the plurality of transformers coupled to the primary-side circuit. The secondary-side circuit includes a plurality of secondary-side switch circuits, each secondary-side switch circuit includes a first secondary-side bridge arm and a second secondary-side bridge arm. The first secondary-side bridge arms and the second secondary-side bridge arms of the secondary-side switch circuits are respectively coupled to two terminals of a plurality of secondary-side windings of the plurality of transformers, and the plurality of secondary-side switch circuits are coupled to a device in parallel.

The main purpose and effect of the present disclosure is to provide an optimization process of the resonant converter so as to acquire better resonance parameters through accurate analysis, thereby achieving low current ripple and increasing the efficiency of the resonant converter.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1A is a block circuit diagram of a resonant converter according to a first embodiment of the present disclosure.
FIG. 1B is a block circuit diagram of the resonant converter according to a second embodiment of the present disclosure.
FIG. 1C is a block circuit diagram of the resonant converter according to a third embodiment of the present disclosure.
FIG. 1D is a block circuit diagram of the resonant converter according to a fourth embodiment of the present disclosure.
FIG. 1E is a block circuit diagram of the resonant converter according to a fifth embodiment of the present disclosure.
FIG. 2A is a block circuit diagram of a resonant conversion module of the resonant converter according to a first embodiment of the present disclosure.
FIG. 2B is a simple equivalent circuit diagram of the resonant conversion module according to the first embodiment of the present disclosure.
FIG. 2C is a power and voltage curve diagram of charging and discharging a battery by the resonant conversion module according to the present disclosure.
FIG. 3A is a schematic waveform diagram of the resonant conversion module operating in a triple phase shift mode according to the present disclosure.
FIG. 3B is a first waveform timing diagram of the resonant conversion module operating in the triple phase shift mode according to the present disclosure.
FIG. 3C is a second waveform timing diagram of the resonant conversion module operating in the triple phase shift mode according to the present disclosure.
FIG. 3D is a third waveform timing diagram of the resonant conversion module operating in the triple phase shift mode according to the present disclosure.
FIG. 3E is a schematic waveform diagram of the resonant conversion module operating in a single phase shift mode according to the present disclosure.
FIG. 3F is a schematic waveform diagram of the resonant conversion module operating in a dual phase shift mode according to the present disclosure.
FIG. 4A is a flowchart of a parameter calculation method for acquiring resonance parameters of the resonant conversion module according to the present disclosure.
FIG. 4B is a schematic diagram of the numerical distribution of a second resonance parameter according to the present disclosure.
FIG. 5A is a first simulation waveform diagram of the resonant converter using the second resonance parameter in a first embodiment according to the present disclosure.
FIG. 5B is a second simulation waveform diagram of the resonant converter using the second resonance parameter in the first embodiment according to the present disclosure.
FIG. 5C is a third simulation waveform diagram of the resonant converter using the second resonance parameter in the first embodiment according to the present disclosure.
FIG. 6A is a first simulation waveform diagram of the resonant converter using the second resonance parameter in a second embodiment according to the present disclosure.
FIG. 6B is a second simulation waveform diagram of the resonant converter using the second resonance parameter in the second embodiment according to the present disclosure.
FIG. 6C is a third simulation waveform diagram of the resonant converter using the second resonance parameter in the second embodiment according to the present disclosure.
FIG. 7A is a system control block diagram of the resonant converter according to the present disclosure.
FIG. 7B is a control block diagram of a lookup table of an operating frequency according to the present disclosure.
FIG. 7C is a block diagram of a value/time conversion according to the present disclosure.
FIG. 7D is a control block diagram of a lookup table of a dead time according to the present disclosure.
FIG. 8 is a flowchart of operating the resonant converter in a closed-loop control according to the present disclosure.
FIG. 9A is a zero-voltage switching interval distribution diagram acquired by performing the resonant converter using a simulation program and substituting the resonance parameter of a first embodiment according to the present disclosure.
FIG. 9B is a zero-voltage switching interval distribution diagram acquired by performing the resonant converter using the simulation program and substituting the resonance parameter of a second embodiment according to the present disclosure.
FIG. 9C is a zero-voltage switching interval distribution diagram acquired by performing the resonant converter using the simulation program and substituting the resonance parameter of a third embodiment according to the present disclosure.
FIG. 10A is a block circuit diagram of the resonant conversion module of the resonant converter according to a second embodiment of the present disclosure.
FIG. 10B is a simple equivalent circuit diagram of the resonant conversion module according to the second embodiment of the present disclosure.
FIG. 11A is a control block diagram of a closed-loop system for charging a battery by the resonant conversion mode according to the second embodiment of the present disclosure.
FIG. 11B is a control block diagram of the closed-loop system for discharging the battery by the resonant conversion mode according to the second embodiment of the present disclosure.

### DETAILED DESCRIPTION

Reference will now be made to the drawing figures to describe the present disclosure in detail. It will be understood that the drawing figures and exemplified embodiments of present disclosure are not limited to the details thereof.

The converters presented in the present disclosure and their parameter calculation manners are all based on dual active bridge (DAB) converters (hereinafter referred to as DAB converters) or series resonant dual active bridge converters (hereinafter referred to as SR DAB converters). However, although the technical contents disclosed in the present disclosure are more applicable to DAB converters and SR DAB converters, they are not incapable of being applied to resonant converters such as LLC and LC. Therefore, unless a specific converter is specified in the disclosure, the resonant converter 100 described later in this disclosure may represent a DAB converter, an SR DAB converter, and a resonant converter, such as LLC and LC.

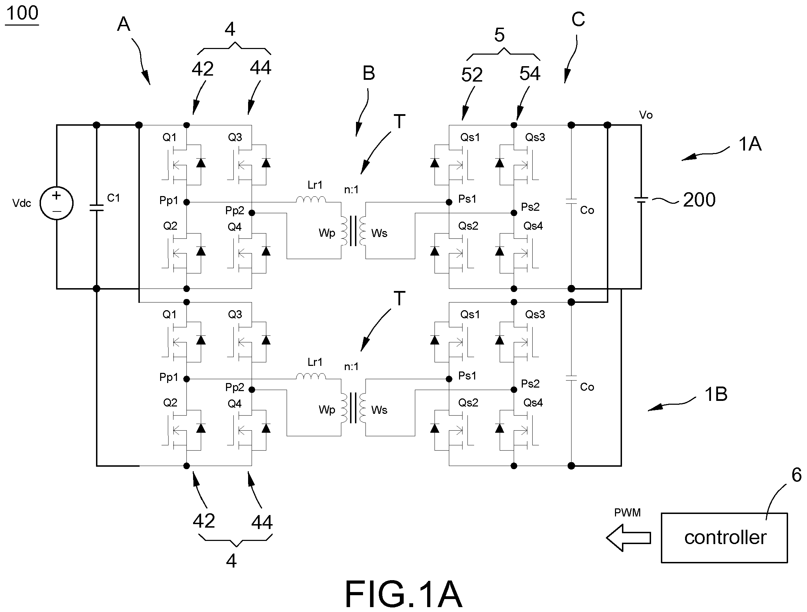

Please refer to FIG. 1A, which shows a block circuit diagram of a resonant converter according to a first embodiment of the present disclosure. The resonant converter 100 includes one or more resonant conversion modules (1A, 1B), and each resonant conversion module (1A, 1B) includes a primary-side circuit A, a resonant circuit B, and a secondary-side circuit C. The primary-side circuit A is coupled to a DC (direct-current) voltage Vdc. The resonant circuit B includes a plurality of resonant tanks (each resonant tank is represented by a single resonant inductor Lr1) and a plurality of transformers T. Each transformer T includes a primary-side winding Wp and a secondary-side winding Ws, and the primary-side winding Wp is coupled to the primary-side circuit A. The secondary-side circuit C includes a plurality of capacitors Co and a plurality of secondary-side switch circuits 5. Each secondary-side switch circuit 5 includes a first secondary-side bridge arm 52 and a second secondary-side bridge arm 54 coupled to the capacitor Co in parallel. The first secondary-side bridge arm 52 and the second secondary-side bridge arm 54 of the secondary-side switch circuit 5 are respectively coupled to two terminals of the secondary-side winding Ws, and the secondary-side switch circuit 5 and the capacitor Co are coupled to a device 200 in parallel. Since the DAB converter and the SR DAB converter are characterized by large power conversion and the output voltage Vo can be adjusted within a wide range, they are particularly suitable for systems that charge and discharge electric vehicles. Therefore, the device 200 may preferably be a battery for electric vehicles, but it is not limited thereto.

Furthermore, in FIG. 1A, the primary-side circuit A includes a capacitor C1 and a plurality of switching circuits 4, and the capacitor C1 and the plurality of switching circuits 4 are respectively coupled to the DC voltage Vdc in parallel. In particular, the capacitor C1 is mainly a component used for voltage regulation and filtering, and therefore it may be replaced by any device with a voltage regulation or filtering function (such as, but not limited to a filter, etc.). Each switching circuit 4 includes a first switching bridge arm 42 and a second switching bridge arm 44, and the first switching bridge arm 42 is connected to the second switching bridge arm 44 in parallel. The first switching bridge arm 42 includes a first switching switch Q1 and a second switching switch Q2 connected in series; the second switching bridge arm 44 includes a third switching switch Q3 and a fourth switching switch Q4 connected in series. A node Pp1 between the first switching switch Q1 and the second switching switch Q2 is coupled to a first terminal of the primary-side winding Wp, and a node Pp2 between the third switching switch Q3 and the fourth switching switch Q4 is coupled to a second terminal of the primary-side winding Wp. In particular, the resonant tank, represented by a single resonant inductor Lr1, is coupled between the first terminal of the primary-side winding Wp and the first switching bridge arm 42, or is coupled between the second terminal of the primary-side winding Wp and the second switching bridge arm 44.

Similarly, the first secondary-side bridge arm 52 includes a first secondary-side switch Qs1 and a second secondary-side switch Qs2; the second secondary-side bridge arm 54 includes a third secondary-side switch Qs3 and a fourth secondary-side switch Qs4. A node Ps1 between the first secondary-side switch Qs1 and the second secondary-side switch Qs2 is coupled to a first terminal of the secondary-side winding Ws, and a node Ps2 between the third secondary-side switch Qs3 and the fourth secondary-side switch Qs4 is coupled to a second terminal of the secondary-side winding Ws. However, the resonant inductor Lr1 is not limited to a single one, that is, it may be adjusted according to types of converters and will not be described in detail here. In addition, in one embodiment, the turns ratio of the primary-side winding Wp and the secondary-side winding Ws is represented by n:1, but it is not limited thereto, that is, it can be any turns ratio that can be implemented in the resonant converter 100.

Furthermore, the controller 6 provides a pulse width modulation signal PWM to control the switching switches Q1 to Q4 and the secondary-side switches Qs1 to Qs4 to convert the DC voltage Vdc into the output voltage Vo. Moreover, since the DAB converter and the SR DAB converter have bidirectional conversion functions, the controller 6 may also control the resonant converter 100 to convert the output voltage Vo into the DC voltage Vdc by providing the pulse width modulation signal PWM. Since the resonant conversion modules 1A, 1B shown in FIG. 1A are coupled in parallel, the resonant converter 100 can perform high-power conversion. In one embodiment, the controller 6 can control the resonant converter 100 to operate in a single phase shift (SPS) mode, a dual phase shift (DPS) mode, and a triple phase shift (TPS) mode. That is, the controller 6 can control the switching switches Q1 to Q4 or the secondary-side switches Qs1 to Qs4 to perform phase shifting, or even control both the switching switches Q1 to Q4 and the secondary-side switches Qs1 to Qs4 to perform phase shifting. In addition, the controller 6 may also have a frequency conversion function (i.e., a period (T) adjustment function), which will be further described later and will not be described in detail here.

In one embodiment, the controller 6 may be a digital signal processor (DSP), but is not limited thereto, that is, any type of controller that can control the resonant converter 100 should be included in the scope of this embodiment. The resonant conversion modules 1A, 1B shown in FIG. 1A may also be controlled using interleaved control to reduce the current stress of the input filter modulated by the switching power supply (SPS). The reason is that interleaved control has the effect of ripple current cancellation, which can reduce ripple current and thereby reduce the size of filter components. On the other hand, in the topology of FIG. 1A, since the resonant converter 100 is mainly a structure in which two resonant conversion modules 1A, 1B are connected in parallel (that is, the primary sides are connected in parallel, and the secondary sides are also connected in parallel), the resonant converter 100 can convert high input voltage, even the DC voltage Vdc with the medium voltage level (MV, generally over 1000 volts), and provide high power output.

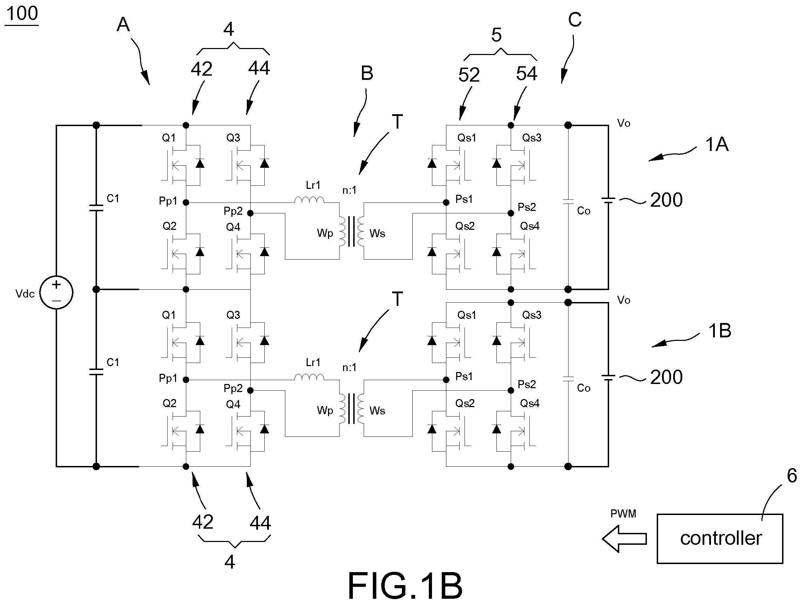

Please refer to FIG. 1B, which shows a block circuit diagram of the resonant converter according to a second embodiment of the present disclosure, and also refer to FIG. 1A. The difference between FIG. 1B and FIG. 1A is that the switching circuit 4 is coupled to the DC voltage Vdc in series to form a circuit structure in which the primary sides of the resonant converter 100 are connected in series and the secondary sides are connected in parallel. In one embodiment, the secondary-side switch circuit 5 shown in FIG. 1B may be similar to the structure of the primary sides, that is, it can also be connected in series, in parallel, or even with a single output (the secondary sides can be coupled to a battery of 400/800 volts). The same is true for the secondary-side switch circuit 5 in FIG. 1A, which will not be described again.

In addition, since the DC voltage Vdc (such as, but not limited to 800 volts) received by the resonant converter 100 is affected by the series connection on the primary side, the capacitor C1 at the two input terminals divides the DC voltage Vdc into half (Vdc/2, 400 volts). Therefore, withstand voltage specifications of the switching switches Q1 to Q4 can be reduced, that is, for example, but not limited to using GaN components with a withstanding voltage of approximately 650 volts to replace the switching switches Q1 to Q4 with a withstanding voltage of more than 800 volts. In addition, other coupling relationships and their achievable functions may be referred to FIG. 1A, and will not be described again here.

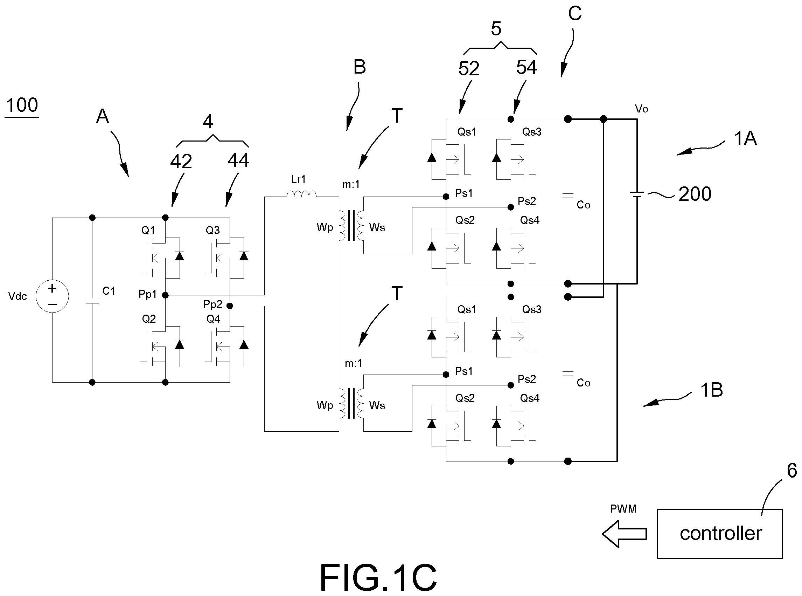

Please refer to FIG. 1C, which shows a block circuit diagram of the resonant converter according to a third embodiment of the present disclosure, and also refer to FIG. 1A and FIG. 1B. The difference between FIG. 1C and FIG. 1A is that the primary-side circuit A includes one switching circuit 4, and the switching circuit 4 includes a first switching bridge arm 42 and a second switching bridge arm 44 connected in parallel. The primary-side windings Wp of the transformer T are coupled in series to form a primary-side winding string. A node Pp1 between the first switching switch Q1 and the second switching switch Q2 is coupled to a first terminal of the primary-side winding string, and a node Pp2 between the third switching switch Q3 and the fourth switching switch Q4 is coupled to a second terminal of the primary-side winding string.

Furthermore, the resonant converter 100 shown in FIG. 1C is mainly a structure in which two resonant conversion modules 1A, 1B are combined into a single H-bridge resonant conversion module 1, and the two primary-side windings Wp are connected in series. Similarly, the secondary side may also be connected in series, in parallel, or even in a single output structure. Since a cross voltage of the transformer T shown in FIG. 1C is equally divided between the two primary-side windings Wp, and a cross voltage of the single primary-side winding Wp is only half, the turns ratio of the primary-side winding Wp and the secondary-side winding Ws may be reduced (indicated by m: 1, m may be an arbitrary number greater than 0). Therefore, the structure of FIG. 1C is particularly suitable for applications that convert from high voltage to low voltage (such as, but not limited to converting from 400 volts to 12 volts). In addition, other coupling relationships and their achievable functions may be referred to FIG. 1A, and will not be described again here.

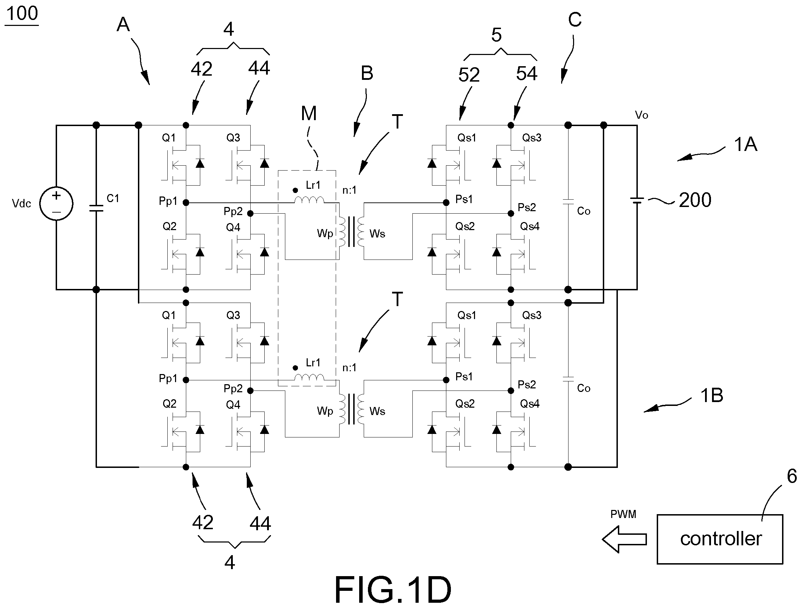

Please refer to FIG. 1D, which shows a block circuit diagram of the resonant converter according to a fourth embodiment of the present disclosure, and also refer to FIG. 1A to FIG. 1C. The difference between FIG. 1D and FIG. 1A is that the resonant inductors Lr1 of the resonant circuit B form a common core structure M. Furthermore, dot terminals (i.e., like terminals, or identical terminals) of the resonant inductors Lr1 are at the same position. Since the two resonant inductors Lr1 form the common core structure M, the two resonant inductors Lr1 are connected in positive and negative parallel to reduce current ripples. Furthermore, since current ripples are reduced, the size of the core can be reduced (compared to two separate cores). In addition, other coupling relationships and their achievable functions may be referred to FIG. 1A, and will not be described again here.

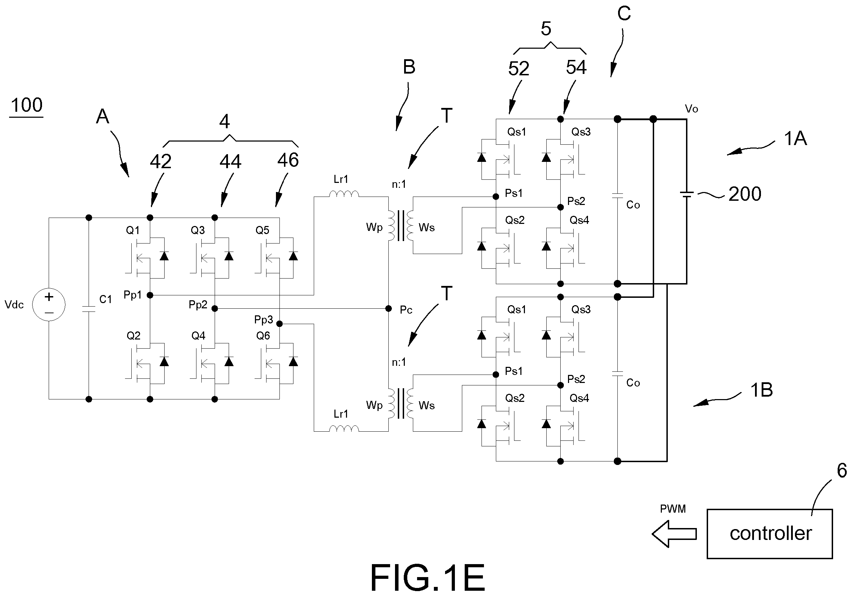

Please refer to FIG. 1E, which shows a block circuit diagram of the resonant converter according to a fifth embodiment of the present disclosure, and also refer to FIG. 1A to FIG. 1C. The difference between FIG. 1E and FIG. 1C is that the switching circuit 4 further includes a third switching bridge arm 46 connected to the first switching bridge arm 42 in parallel, and the third switching bridge arm 46 includes a fifth switching switch Q5 and a sixth switching switch Q6 connected in series. In addition to the structure of the primary-side winding string, the transformers T also form a center tap terminal Pc between the two primary-side windings Wp. Moreover, a node Pp3 between the fifth switching switch Q5 and the sixth switching switch Q6 is coupled to the center tap terminal Pc. Since the two primary-side windings Wp of the transformer T form a center-tapped structure, a cross voltage of the two primary-side windings Wp is Vdc respectively, thereby making this structure suitable for applications where the turns ratio of the transformer is not very different (such as, but not limited to 1: 1). In addition, other coupling relationships and their achievable functions may be referred to FIG. 1C, and will not be described again here.

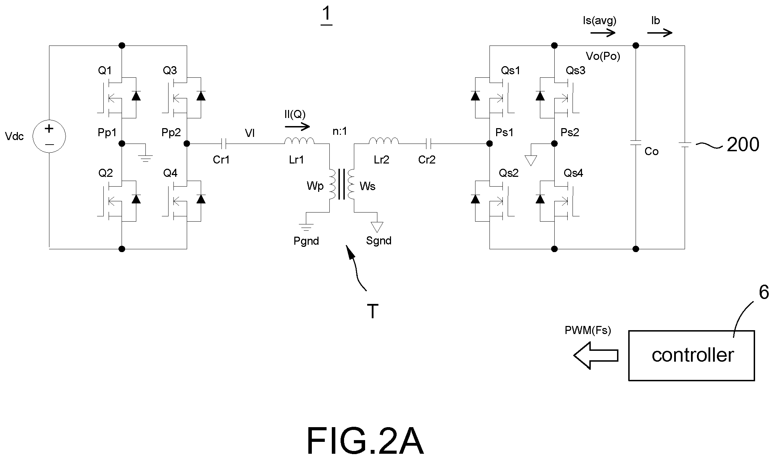

Please refer to FIG. 2A, which shows a block circuit diagram of a resonant conversion module of the resonant converter according to a first embodiment of the present disclosure, and also refer to FIG. 1A to FIG. 1E. In FIG. 2A, the resonant conversion module 1 mainly provides a circuit structure of a series resonant dual active bridge, which mainly includes a primary-side resonant tank and a secondary-side resonant tank. The primary-side resonant tank includes a resonant inductor Lr1 and a resonant capacitor Cr1, and the secondary-side resonant tank includes a resonant inductor Lr2 and a resonant capacitor Cr2. Its detailed circuit structure and coupling relationship are similar to the resonant conversion modules 1A, 1B shown in FIG. 1A, and will not be described again here. Since resonant capacitors Cr1, Cr2 are added to the resonant circuit of the resonant conversion module 1, the resonant capacitors Cr1, Cr2 will resonate with the resonant inductors Lr1, Lr2 respectively. Since the resonant capacitors Cr1, Cr2 resonate with the resonant inductors Lr1, Lr2, the inductor current Il rises or falls in an oblique line (the frequency is equal to the resonant frequency of the resonant capacitors Cr1, Cr2 and the resonant inductors Lr1, Lr2). In one embodiment, since the circuit of FIG. 2A has only one resonant conversion module 1, this resonant conversion module 1 may be regarded as the resonant converter 100, and the same is true for the resonant conversion module 1 described later.

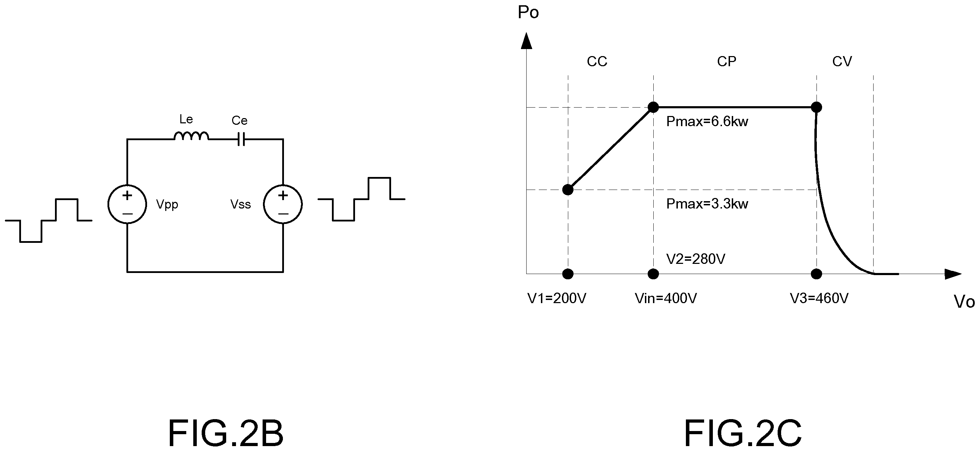

Please refer to FIG. 2B, which shows a simple equivalent circuit diagram of the resonant conversion module according to the first embodiment of the present disclosure, and also refer to FIG. 1A to FIG. 2A. In FIG. 2B, the voltages of the nodes Pp1, Pp2 shown in FIG. 2A are equivalent to a voltage of the voltage source Vpp, and the voltages of the nodes Ps1, Ps2 are equivalent to a voltage of the voltage source Vss. Moreover, the equivalent inductance of the resonant conversion module 1 is Le and the equivalent capacitance is Ce. In particular, in the above-mentioned triple phase shift mode, the voltage Vpp and the voltage Vss will lead/lag in the waveform due to the phase shift so as to improve the dynamic performance of the circuit to load changes and shorten the adjustment time.

Please refer to FIG. 2C, which shows a power and voltage curve diagram of charging and discharging a battery by the resonant conversion module according to the present disclosure, and also refer to FIG. 1A to FIG. 2B. Although the controller 6 can control the resonant conversion module 1 to provide a fixed voltage Vo to supply power to the back-end coupled device 200, since the resonant conversion module 1 has the characteristic of adjusting the voltage Vo, it is particularly suitable for coupling to a battery to charge and discharge the battery. Furthermore, the following content of the present disclosure mainly focuses on the concept when the device 200 is a battery. Specifically, FIG. 2C mainly shows the curves of power Po and voltage Vo of FIG. 2A. When the voltage Vo is above V1 (for example, but not limited to 200 volts), the controller 6 can set a mode of charging and discharging the battery by the resonant conversion module 1 in a constant-current (CC) mode, and the power Po starts to rise from Pmin (such as, but not limited to 3.3 kW). After the voltage Vo is increased to V2 (for example, but not limited to 280 volts), the controller 6 can set the mode of charging and discharging the battery by the resonant conversion module 1 in a constant-power (CP) mode, and the power Po is maintained at Pmax (such as, but not limited to 6.6 kW). Finally, after the voltage Vo is increased to V3 (for example, but not limited to 460 volts), the controller 6 can set the mode of charging and discharging the battery by the resonant conversion module 1 in a constant-voltage (CV) mode. Since the battery is nearly fully charged, power begins to gradually decrease.

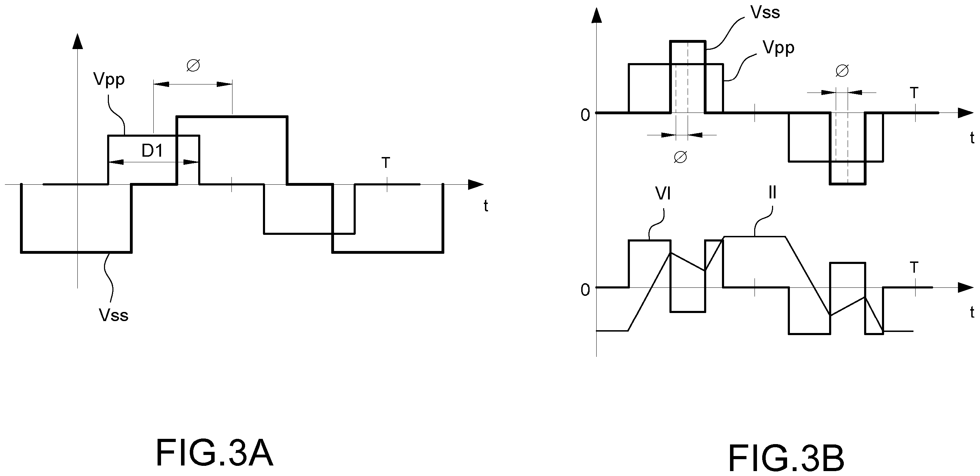

Please refer to FIG. 3A, which shows a schematic waveform diagram of the resonant conversion module operating in a triple phase shift mode according to the present disclosure, and also refer to FIG. 1A to FIG. 2C. In FIG. 3A, Vpp is the voltage waveform between the node Pp1 and the node Pp2 of the switching circuit 4 (see FIG. 2A) when the switching switches Q1 to Q4 are switched; Vss is the voltage waveform between the node Ps1 and the node Ps2 of the secondary-side switch circuit 5 (see FIG. 2A) when the secondary-side switches Qs1 to Qs4 are switched. Specifically, FIG. 3A mainly shows the waveform of the resonant conversion module 1 of FIG. 2A operating in the triple phase shift (TPS) mode. Therefore, the controller 6 shown in FIG. 2A can control the switching circuit 4 to perform a phase shift, and its phase shift amount D1 (i.e., the first phase shift amount) may be between 0 and 0.5 (the phase shift of the switching switches Q1 to Q4 will cause the waveform of the voltage Vpp to produce a situation similar to the increase or decrease of the duty cycle). Similarly, the controller 6 shown in FIG. 2A can control the secondary-side switch circuit 5 to perform a phase shift, and its phase shift amount D2 (i.e., the second phase shift amount) may also be between 0 and 0.5. Therefore, the voltages Vpp, Vss will increase or decrease with the change of the phase shift amount. In addition, the controller 6 shown in FIG. 2A can also control the switching circuit 4 and the secondary-side switch circuit 5 to perform the phase shift, and the phase shift amount ψ (i.e., the third phase shift amount) may be between -T/2 and T/2 (where T is the period, which corresponds to the operating frequency of the resonant conversion module 1). Therefore, the voltages Vpp, Vss will move relative to each other. Moreover, in addition to performing the triple phase shift mode, compared with the traditional fixed frequency technology (the period is fixed at 0 to T), the present disclosure also performs frequency changes, which will be further explained later.

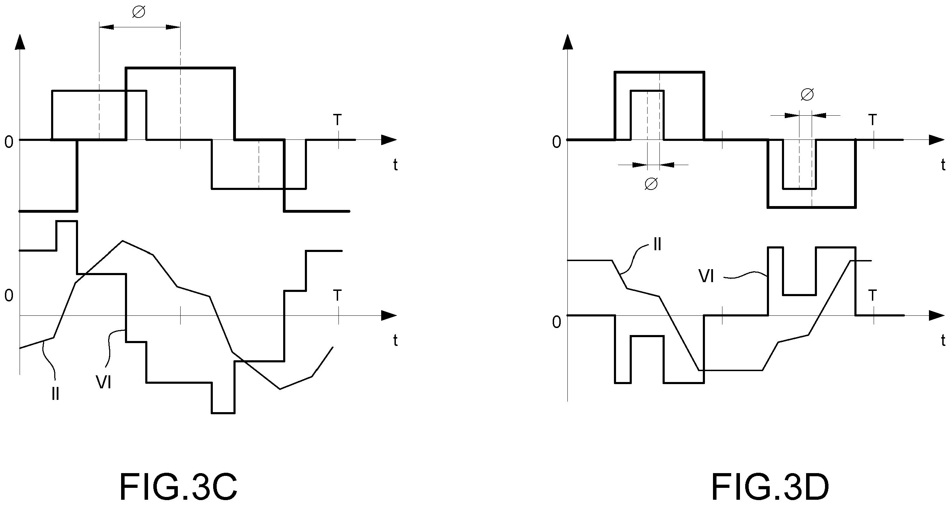

Specifically, based on the operation of the above-mentioned triple phase shift (TPS) mode, the following three waveform timing diagrams of FIG. 3B to FIG. 3D may be summarized. In the region I of FIG. 3B, the first phase shift amount D1 is greater than the second phase shift amount D2 plus a certain amount so that the corresponding waveforms of the voltages Vpp, Vss and the corresponding waveforms of the inductor voltage Vl and inductor current Il (see FIG. 2A) can be formed, and the switching switches Q1 to Q4 and the secondary-side switches Qs1 to Qs4 can work in zero voltage switching (ZVS). Furthermore, the region III of FIG. 3C is also similar to FIG. 3B, and therefore a waveform similar to FIG. 3B can be acquired. The switching switches Q1 to Q4 and secondary-side switches Qs1 to Qs4 can also work in ZVS. In the region VI of FIG. 3D, the second phase shift amount D2 is greater than the first phase shift amount D1 plus a certain amount so that a waveform similar to FIG. 3B can be acquired, and the switching switches Q1 to Q4 and the secondary-side switches Qs1 to Qs4 can also work in ZVS. Therefore, by the triple phase shift (TPS) mode and the frequency change technology proposed in the present disclosure, the resonant conversion module 1 of the present disclosure can provide better efficiency at low power. In one embodiment, for convenience of presentation, the waveforms of the inductor current Il in FIG. 3B to FIG. 3D only show simple point-to-point straight line waveforms.

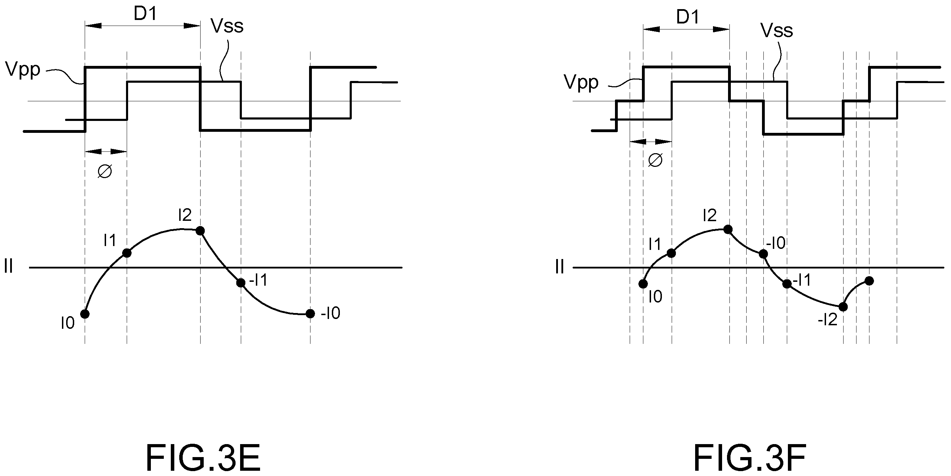

Please refer to FIG. 3E, which shows a schematic waveform diagram of the resonant conversion module operating in a single phase shift mode according to the present disclosure; please refer to FIG. 3F, which shows a schematic waveform diagram of the resonant conversion module operating in a dual phase shift mode according to the present disclosure, and also refer to FIG. 1A to FIG. 3D. In FIG. 3E, the controller 6 mainly controls the resonant conversion module 1 to operate in the single phase shift (SPS) mode, and therefore the controller 6 phase shifts the control signals of controlling only the switching switches Q1 to Q4 or the secondary-side switches Qs1 to Qs4. On the contrary, in FIG. 3E, the controller 6 mainly controls the resonant conversion module 1 to operate in the single phase shift (SPS) mode, and therefore the controller 6 phase shifts the control signals of controlling both the switching switches Q1 to Q4 and the secondary-side switches Qs1 to Qs4, which makes the waveform of the inductor current Il rise/fall like an exponential from I0, I1, -I0 to -I1.

In FIG. 3F, the controller 6 mainly controls the resonant conversion module 1 to operate in the dual phase shift (DPS) mode, thereby causing the resonant inductors Lr1, Lr2 to resonate with the resonant capacitors Cr1, Cr2 respectively, which makes the waveform of the inductor current Il change from I0, I1, -I0 to -I1 but not exponential rise/fall. Therefore, the inductor current Il will be more distorted due to resonance. It is difficult to design its resonant tank and other parameters through simple formulas, and find the value of the inductor current Il during operation to acquire the inductor current waveform.

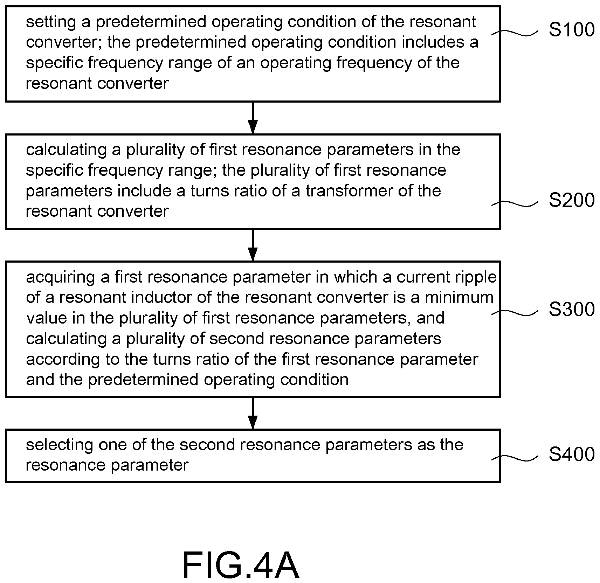

Therefore, please refer to FIG. 4A, which shows a flowchart of a parameter calculation method for acquiring resonance parameters of the resonant conversion module according to the present disclosure, and also refer to FIG. 1A to FIG. 3F. The parameter calculation method in FIG. 4A may mainly be applied to the resonant conversion module 1 of the SR DAB structure. Although the resonant conversion module 1 of the DAB structure generally only has the resonant inductor Lr1 and the resonance parameters can be acquired through a simple calculation formula, the parameter calculation method in FIG. 4A can also be applied to the resonant conversion module 1 of the DAB structure to acquire more accurate resonance parameters, and can even be applied to LLC, LC and other resonant converters to calculate the resonance parameters. In order to avoid obscuring the technical features of the present disclosure, the parameter calculation method in FIG. 4A is still based on the resonant conversion module 1 applied to the SR DAB structure.

Specifically, the parameter calculation method of the present disclosure first includes a step of: setting a predetermined operating condition of the resonant converter (S 100), and the predetermined operating condition includes a specific frequency range of an operating frequency of the resonant converter. Before calculating the resonance parameters, the predetermined operating condition of the resonant converter 100 (resonant conversion module 1) must first be determined. The predetermined operating condition is, for example, but not limited to, an upper power limit at the device terminal of the resonant converter 100 (resonant conversion module 1) Po=Pmax (may be set to 6.6 kW referring to FIG. 2C), and a variation range of the voltage Vo, Vo=V2 to V3 (may be set to 280 to 460 volts referring to FIG. 2C). It may also include parameters such as, but not limited to, the upper and lower numerical limits of the resonant inductors Lr1, Lr2, the upper and lower numerical limits of the resonant capacitors Cr1, Cr2, and the DC voltage Vdc. In particular, the predetermined operating condition needs to include a specific frequency range of the operating frequency of the resonant converter 100 (resonant conversion module 1), for example, but not limited to, the frequency range of the operating frequency is 400 kHz to 600 kHz.

In particular, the frequency change disclosed in the present disclosure refers to a variable-frequency function. Specifically, in the constant-power charging mode CP, the output power of the resonant conversion module 1 remains unchanged, but the magnitude of the current changes with the voltage. Therefore, when the voltage of the device 200 (such as, but not limited to, a battery) increases during charging, the current will decrease, causing the output condition of the resonant conversion module 1 to change all the time so that the operating frequency calculated by the controller 6 will be different (in the above example, it will vary from 400 kHz to 600 kHz). In addition, the parameter calculation method of the present disclosure can be calculated by a device with a processor (such as, but not limited to, a computer). The operator can introduce the predetermined operating condition into the predesigned calculation software of the device, and the operator can then acquire the best value through selection and operation.

Afterward, calculating a plurality of first resonance parameters in the specific frequency range (S200), and the plurality of first resonance parameters include a turns ratio of a transformer of the resonant converter. After setting the operating frequency (400 kHz to 600 kHz), many numerical combinations of the resonant circuit B can be calculated according to the operating frequency. These combinations may include, for example but not limited to, multiple inductance values of the resonant inductors Lr1, Lr2, multiple capacitance values of the resonant capacitors Cr1, Cr2, and multiple turns ratios n of the transformer T. The combination of these resonance parameters (that is, including inductance value, capacitance value, and turns ratio n) can meet the predetermined operating condition when the controller 6 controls the resonant converter 100 (resonant conversion module 1).

Afterward, acquiring a first resonance parameter in which a current ripple of a resonant inductor of the resonant converter is a minimum value in the plurality of first resonance parameters, and calculating a plurality of second resonance parameters according to the turns ratio of the first resonance parameter and the predetermined operating condition (S300). In the combinations of multiple resonance parameters, the first resonance parameter in which a current ripple of the inductor current Il in the rms value of the resonant inductor Lr1 of the resonant converter 100 (resonant conversion module 1) is a minimum value (min_Irms) is found and selected. The calculation of current ripple Q may be introduced into the formula Q=min 1/N Σ Il_rms(i)^2*(1+n^2), but it is not limited to this, that is, there are many existing calculation methods. Afterward, the turns ratio n of the selected first resonance parameter is taken as the selected turns ratio N=n, and a plurality of second resonance parameters are calculated according to the selected turns ratio N and the same predetermined operating condition. In addition to the constant value of the selected turns ratio N=n, these second resonance parameters may include a combination of multiple inductance values and multiple capacitance values.

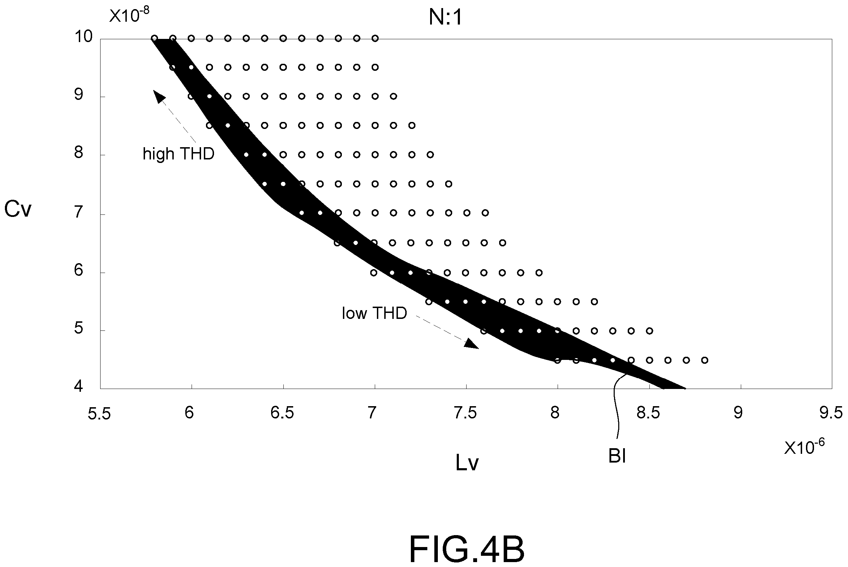

Please refer to FIG. 4B, which shows a schematic diagram of the numerical distribution of a second resonance parameter according to the present disclosure, and also refer to FIG. 4A. After the above plurality of second resonance parameters are graphed according to the inductance value Lv and the capacitance value Cv, a distribution diagram shown in FIG. 4B may be arranged. In particular, each point represents a second resonance parameter, and each second resonance parameter includes at least one inductance value Lv, capacitance value Cv, and the selected turns ratio N, and the turns ratio parameters of the second resonance parameters are all the same. In FIG. 4B, the band-shaped interval BI is a preferred second resonance parameter, which mainly includes a smaller inductance value Lv or capacitance value Cv, which is mainly beneficial to reducing the size of the inductor and the capacitor.

Please refer to FIG. 4A again, the method further includes a step of: selecting one of the second resonance parameters as the resonance parameter (S400). The second resonance parameters in the band-shaped interval BI of FIG. 4B are all preferred second resonance parameters, and these second resonance parameters may be used to set the resonant circuit B of the resonant converter 100 (resonant conversion module 1). Furthermore, in these second resonance parameters, the capacitance value Cv of the upper second resonance parameter is larger (lower voltage stress) and the inductance value Lv is smaller, and the total harmonic distortion (THD) of the inductor current Il will be larger. On the contrary, the capacitance value Cv of the lower second resonance parameter is smaller (higher voltage stress) and the inductance value Lv is larger, and the total harmonic distortion (THD) of the inductor current Il will be smaller. Moreover, a larger value means that the volume occupied by its components is larger, especially the size of the capacitance value Cv is more obvious.

Therefore, the designer can select any one of the plurality of second resonance parameters in the band-shaped interval BI according to specific conditions to set the resonant circuit B of the resonant converter 100 (resonant conversion module 1), and the specific conditions may include, but are not limited to, requirements from manufacturers and customers, restrictions on circuit size specifications, and other conditions. Therefore, the designer can select more suitable parameters in the band-shaped interval BI according to the application scenarios and actual needs of the resonant converter 100 (resonant conversion module 1). Therefore, in summary, the present disclosure provides an optimization process of the resonant converter 100 (resonant conversion module 1) so as to acquire better values of the resonance parameters (i.e., inductance value Lv, capacitance value Cv, and turns ratio) through accurate analysis.

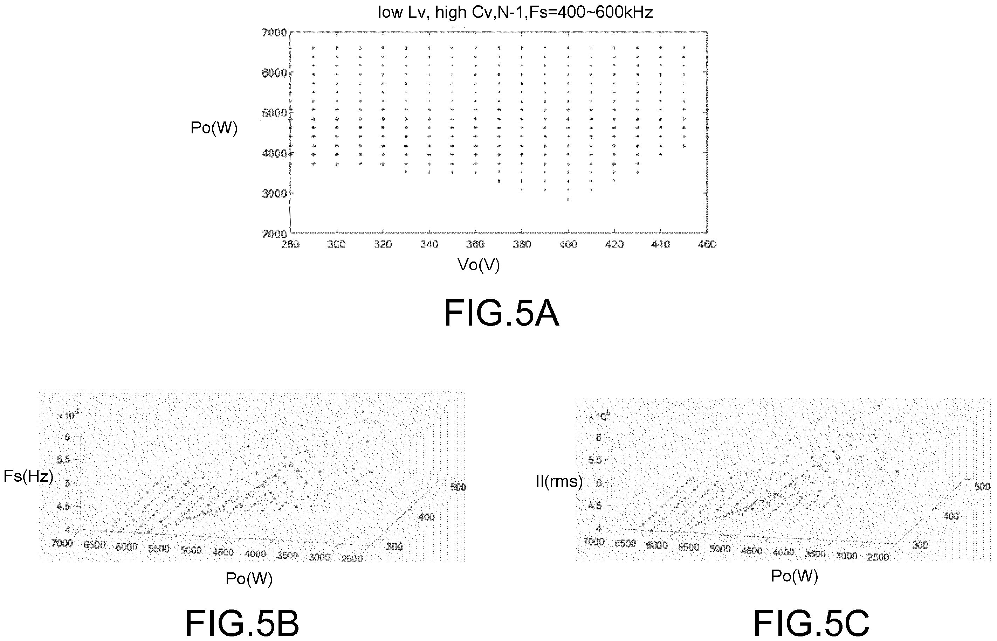

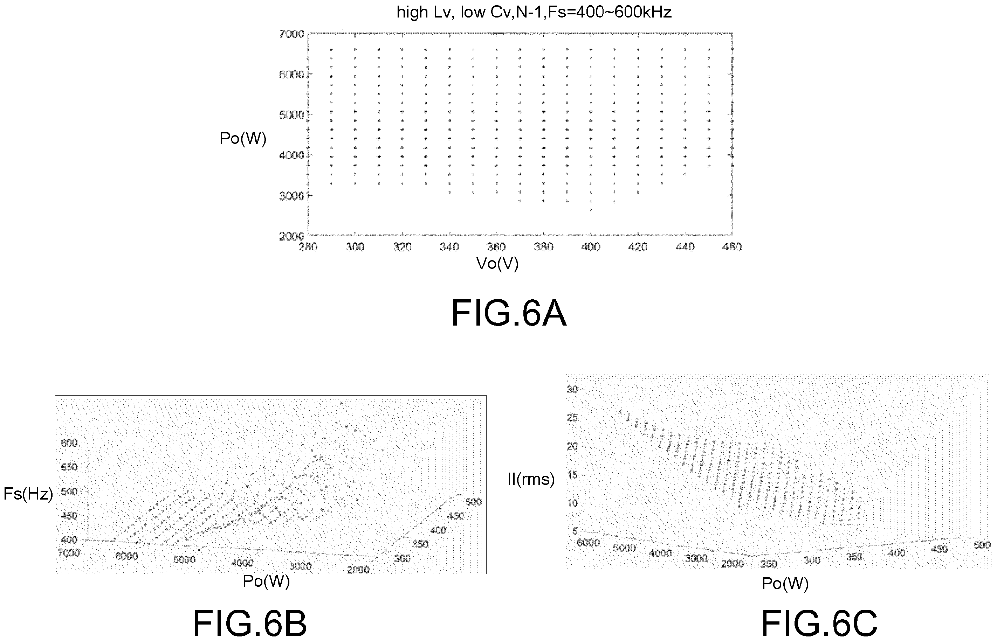

Please refer to FIG. 5A to FIG. 5C, which show different simulation waveform diagrams of the resonant converter using the second resonance parameter in a first embodiment according to the present disclosure; please refer to FIG. 6A to FIG. 6C, which show different simulation waveform diagrams of the resonant converter using the second resonance parameter in a second embodiment according to the present disclosure, and also refer to FIG. 1A to FIG. 4B. The second resonance parameters introduced in FIG. 5A to FIG. 5C are the low inductance value Lv, the high capacitance value Cv, and the operating frequency Fs varying from 400 kHz to 600 kHz. Moreover, it can be seen from the power/voltage distribution diagram in FIG. 5A that the resonant converter 100 (resonant conversion module 1) can achieve the zero voltage switching (ZVS) function through the control of the controller 6 at any point. Moreover, FIG. 5B and FIG. 5C are three-dimensional perspective views from the adjusted FIG. 5A. In addition to the power/voltage distribution, FIG. 5B also adds the parameter of the operating frequency Fs, and FIG. 5C also adds the parameter of the inductor current Il (rms). Therefore, it can be seen from FIG. 5A to FIG. 5C that the second resonance parameter is a low inductance value Lv and a high capacitance value Cv, which can achieve the zero voltage switching (ZVS) function in a wide range of power/voltage.

FIG. 6A to FIG. 6C are similar to FIG. 5A to FIG. 5C, except that the second resonance parameters introduced in FIG. 6A to FIG. 6C are high inductance value Lv and low capacitance value Cv. It can be seen that the area where the zero voltage switching (ZVS) function can be achieved is slightly different from FIG. 5A to FIG. 5C, but the overall range is roughly the same as FIG. 5A to FIG. 5B. Therefore, through the parameter (optimization) calculation method of the resonant converter proposed in the present disclosure, selective matching can be performed according to the respective costs of the resonant inductors Lr1, Lr2, resonant capacitors Cr1, Cr2 and transformer T, thereby reducing the cost of the resonant circuit B, and the function of zero voltage switching (ZVS) can be achieved to increase the efficiency of the resonant converter 100 (resonant conversion module 1).

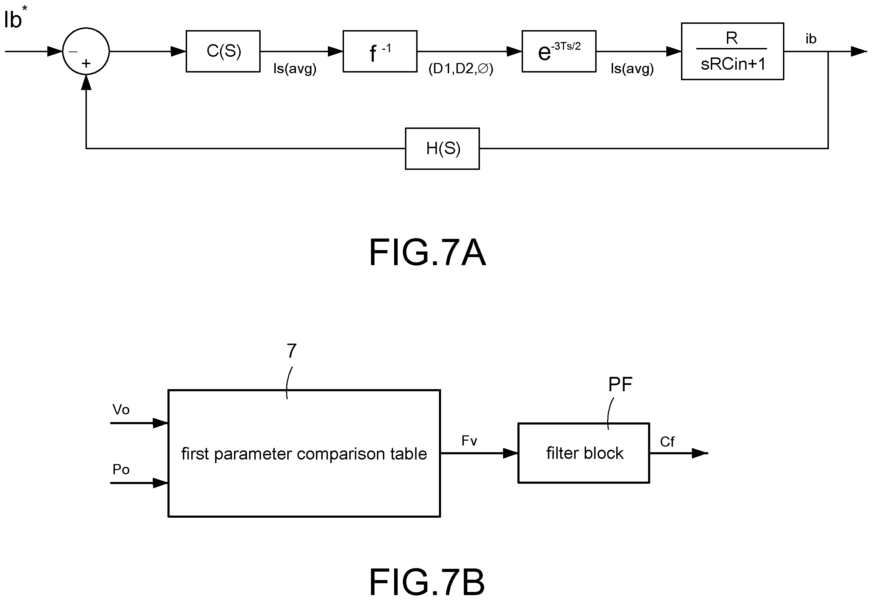

On the other hand, after the resonance parameters are calculated and designed, the closed loop of the resonant converter 100 (resonant conversion module 1) still needs to be designed and operated to confirm the phase shift amount, dead time and other parameters of the resonant converter 100 (resonant conversion module 1), and the pulse width modulation signal PWM provided by the controller 6 is adjusted accordingly to increase the stability and efficiency of the resonant converter 100 (resonant conversion module 1) during operation. Specifically, please refer to FIG. 7A, which shows a system control block diagram of the resonant converter according to the present disclosure, and also refer to FIG. 1A to FIG. 6C. Since the resonant converter 100 (resonant conversion module 1) uses the inductor current of the SR DAB conversion module to resonate, its current changes are more complicated than that of the DAB structure, and therefore it is difficult to use simple formulas to calculate its parameters. Therefore, in addition to using the parameter calculation method of FIG. 6A and FIG. 6B to calculate the resonance parameters, the resonant converter 100 (resonant conversion module 1) also needs to acquire the changes of voltage Vo and power Po at the device terminal through program simulation. Appropriate parameters are acquired through the closed-loop system control block shown in FIG. 7A so that the controller 6 can adjust the pulse width modulation signal PWM accordingly.

Specifically, since when the resonant converter 100 (resonant conversion module 1) charges the battery, the current Ib at the device terminal is mainly controlled, and the sum of the current Ib and the current provided to the capacitor Co is an average current Is(avg) of the secondary-side switches Qs1 to Qs4 of the secondary-side switch circuit 5. Therefore, the closed-loop system control block for charging the battery by the resonant converter 100 (resonant conversion module 1) shown in FIG. 7A can be acquired. In FIG. 7A, the controller 6 can set a current command Ib*, and the controller 6 can adjust the closed loop according to the error between the current command Ib* and the current Ib. Moreover, the closed loop is mainly adjusted by adjusting the operating frequency Fs, phase shift amounts D1, D2, ψ so that the current Ib can be adjusted according to the current command Ib*.

In addition, since the processing speed and processing capacity of the controller 6 are related to the cost of the controller 6, and since the battery is in the constant-power charging mode CP, the voltage Vo and the current Ib are time-varying. If the controller 6 performs real-time calculations, the controller 6 needs a faster processing speed or a larger processing capacity, resulting in the inability to reduce the cost of the controller 6. Therefore, in addition to acquiring appropriate parameters through the closed-loop system control block to increase the stability and efficiency of the resonant converter 100 (resonant conversion module 1) during operation, the present disclosure further reduces the cost of the controller 6 by using a lookup table so that a lower-end digital signal processor (DSP) may be used.

Specifically, please refer to FIG. 7B, which shows a control block diagram of a lookup table of an operating frequency according to the present disclosure, and also refer to FIG. 1A to FIG. 7A. In the closed-loop block of FIG. 7A, the controller 6 can read the voltage Vo and the power Po at the device terminal, and introduce the voltage Vo and the power Po into a predetermined first parameter comparison table 7 shown in FIG. 7B to acquire the corresponding operating frequency Fs. Specifically, the controller 6 can acquire a frequency value Fv corresponding to the voltage Vo and the power Po through the first parameter comparison table 7. Moreover, since the controller 6 generally reads the voltage Vo and the power Po quickly, it is easier to generate transient noise and cause corresponding fluctuations in the frequency value Fv. Therefore, the frequency value Fv can be filtered through a filter block PF to acquire a relatively stable frequency command Cf, and the frequency command Cf corresponds to the operating frequency Fs of switching switches (including the switching switches Q1 to Q4 and the secondary-side switches Qs1 to Qs4). In particular, the filter block PF may preferably be a low-pass filter block to filter out high-frequency component noise, but it is not limited to this. In addition, in addition to the value acquired by the filter block PF being directly used as the frequency command Cf, a difference value expression may also be used, which means that the frequency command Cf may be the difference between the frequency value Fv and the value acquired by the filter block PF, and the adjustment by the difference is generally more accurate. Therefore, the frequency command Cf may be expressed in various ways and is not limited to the above examples.

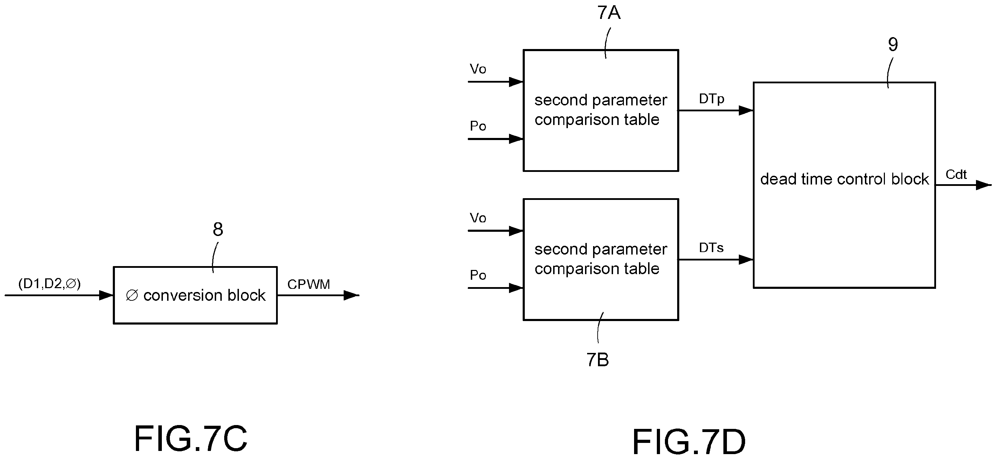

Please refer to FIG. 7A again, the frequency command Cf corresponding to the operating frequency Fs is introduced into the block of f^-1 to acquire the phase shift amounts D1, D2, ψ, and adjust the current Ib through the closed-loop control block. Since the phase shift amounts D1, D2, ψ are numerical values, the controller 6 can achieve the phase shift effect by converting the numerical values into delays such as time differences. Therefore, referring to FIG. 7C, the phase shift amounts D1, D2, ψ may be converted into value/time through the ψ conversion block to convert the value into the corresponding delay time, and provide the pulse width modulation command Cpwm according to the delay time. Furthermore, the controller 6 modulates the pulse width modulation signal PWM according to the pulse width modulation command Cpwm so as to control the switching of the switches (including the switching switches Q1 to Q4 and the secondary-side switches Qs1 to Qs4) through the pulse width modulation signal PWM. However, in addition to the delay time, the controller 6 should have various numerical conversion manners, which are not limited to the above-mentioned embodiments.

On the other hand, please refer to FIG. 7D, which shows a control block diagram of a lookup table of a dead time according to the present disclosure, and also refer to FIG. 1A to FIG. 7A. Since the switching of the upper and lower arms of the switching switches Q1 to Q4 and the secondary-side switches Qs1 to Qs4 requires a dead time, and also needs to be controlled based on zero voltage switching (ZVS), through the control strategy of the resonant converter 100 (resonant conversion module 1) proposed in the present disclosure, a suitable dead time may also be acquired through a lookup table. That is, the dead time when switching the switches of the switching circuit 4 and the secondary-side switch circuit 5 of the resonant converter 100 (resonant conversion module 1) can be acquired by the lookup table from the voltage Vo and power Po at the device terminal. Therefore, the controller 6 can control the switching switches Q1 to Q4 and the secondary-side switches Qs1 to Qs4 according to the dead time to achieve the zero voltage switching (ZVS) effect.

Specifically, the controller 6 can read the voltage Vo and the power Po at the device terminal, and introduce the voltage Vo and the power Po into predetermined second parameter comparison tables 7A, 7B shown in FIG. 7D to acquire the dead time when switching the switches of the switching circuit 4 and the secondary-side switch circuit 5. Specifically, the controller 6 can respectively acquire the dead time values DTp, DTs through the second parameter comparison tables 7A, 7B. In particular, the dead time value DTp corresponds to the primary-side dead time when the primary-side switching switches Q1 to Q4 are switched, and the dead time value DTs corresponds to the secondary-side dead time when the secondary-side switches Qs1 to Qs4 are switched. Afterward, the dead time command Cdt is generated through the control of a dead time control block 9, and the dead time command Cdt corresponds to the dead time when switching the switches of the switching circuit 4 and the secondary-side switch circuit 5.

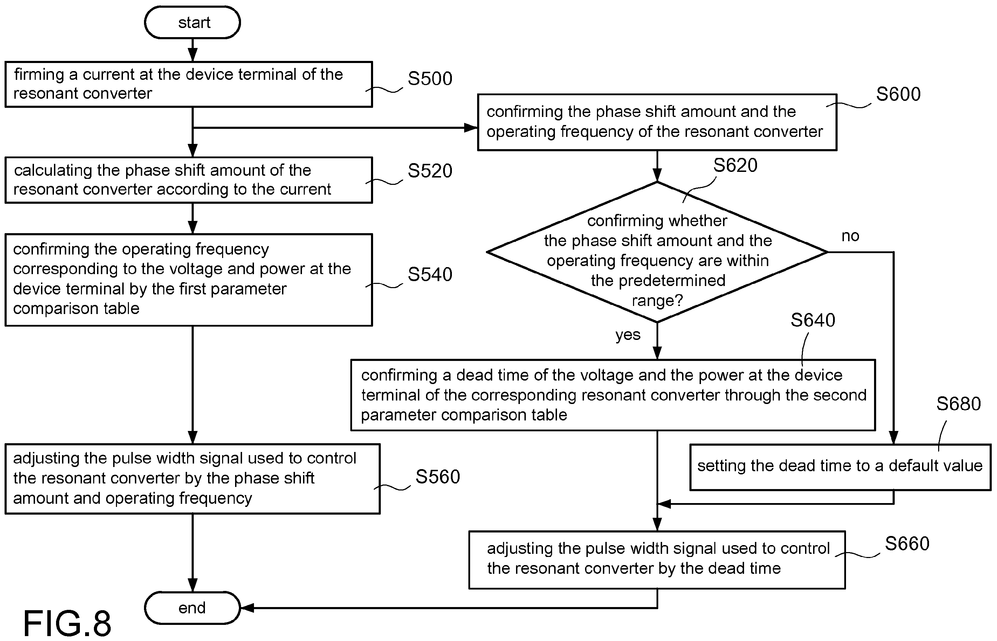

Finally, the FIG. 2A, FIG. 7A to FIG. 7D are integrated to acquire the closed-loop control flowchart of the resonant converter shown in FIG. 8. Specifically, in FIG. 8, the closed-loop control process of the resonant converter includes a first process (S500 to S560) and a second process (S600 to S680). The first process (S500 to S560) is a fast response process, mainly to increase the response speed of the resonant converter 100 (resonant conversion module 1), increase its stability, and provide better control effects. Therefore, the controller 6 usually uses a faster frequency (such as but not limited to 50 µs) to perform the process, and regardless of whether the resonant converter 100 operates in a steady state, the steps of the first process (S500 to S560) will be performed. The second process (S600 to S680) is a slow response process, mainly related to the dead time, and is used to increase the operating efficiency of the resonant converter 100. Since the response speed of this process does not easily affect the stability of the resonant converter 100 (resonant conversion module 1), and there is no need to constantly check the table and constantly change the values, the controller 6 usually uses a slower frequency (such as, but not limited to, 1 ms) to perform this process, and needs to wait for the resonant converter 100 to enter a steady state before performing the second process (S600 to S680).

The first process (S500 to S560) include the steps of: first, confirming a current at the device terminal of the resonant converter (S500). Afterward, calculating the phase shift amount of the resonant converter according to the current (S520). In particular, in FIG. 7A, the controller 6 can set the current command Ib*, and calculate the secondary-side average current Is(avg) according to a first error amount between the current Ib and the current command Ib*, and calculate the phase shift amounts D1, D2, ψ according to the secondary-side average current Is(avg). Afterward, confirming the operating frequency corresponding to the voltage and power at the device terminal by the first parameter comparison table (S540, this may be referred to FIG. 7B, and will not be described in detail here). Finally, adjusting the pulse width signal used to control the resonant converter by the phase shift amount and operating frequency (S560, this may be referred to FIG. 7C, and will not be described in detail here).

The second process (S600 to S680) continues the first process (S500 to S560), and the second process (S600 to S680) may be performed at any time during the performance of step S500 to step S520, as long as the timing is appropriate (Here, the step S500 is taken as an illustrative example. Furthermore, after the resonant converter 100 enters a steady state, the second process (S600 to S680) is performed. In particular, the controller 6 can determine whether the resonant converter 100 is operating in a stable state by, for example, but not limited to, detecting whether the operating frequency Fs, the current Ib, the phase shift amounts D1, D2, ψ and other parameters of the resonant converter 100 are within a stable state range. The second process (S500 to S560) include the steps of: first, confirming the phase shift amount and the operating frequency of the resonant converter (S600). After the first process (S500 to S560) is performed at least once, the phase shift amounts D1, D2, ψ and the operating frequency Fs of the resonant converter 100 (resonant conversion module 1) can be acquired. Afterward, confirming whether the phase shift amount and the operating frequency are within the predetermined range (S620). When the phase shift amounts D1, D2, ψ and the operating frequency are both within the predetermined range, it means that the efficiency of the resonant converter 100 (resonant conversion module 1) can be additionally increased by adjusting the dead time. Therefore, confirming a dead time of the voltage and the power at the device terminal of the corresponding resonant converter through the second parameter comparison table (S640, this may be referred to FIG. 7D, and will not be described in detail here).

Afterward, adjusting the pulse width signal used to control the resonant converter by the dead time (S660). The controller 6 can adjust the pulse width modulation signal PWM through the dead time command Cdt corresponding to the dead time, and the specific adjustment manner is similar to FIG. 7C, that is, the value of the dead time command Cdt is converted into the pulse width modulation command Cpwm corresponding to the delay time, which will not be described again here. On the other hand, when the determination in step S620 is "No", it means that at least one of the phase shift amounts D1, D2, ψ and the operating frequency Fs is not within the predetermined range. Therefore, setting the dead time to a default value (S680). When at least one of the phase shift amounts D1, D2, ψ and the operating frequency Fs is not within the predetermined range, it means that the resonant converter 100 (resonant conversion module 1) may not have been adjusted to a better state, and therefore the dead time is set to the default value without adjustment, and continue with step S660.

In one embodiment, the closed-loop control process shown in FIG. 8 may preferably be applied to the resonant converter 100 (resonant conversion module 1) operating in the constant-power charging mode CP (that is, the mode of charging and discharging the battery is the constant-power charging mode CP), and after confirming that the operation is in the constant-power charging mode CP, step S500 is performed. The main reason is that in the constant-power charging mode CP, the voltage Vo and the current Ib are not constant values, and therefore parameters such as the phase shift amounts D1, D2, ψ and the operating frequency Fs will be adjusted at any time to meet high efficiency requirements. However, the constant-current mode CC and the constant-voltage mode CV may also be implemented using the process in FIG. 8. However, since the voltage Vo or the current Ib is a constant value, certain parameters such as the phase shift amounts D1, D2, ψ and the operating frequency Fs will not be adjusted at any time, and the overall efficiency has not been significantly increased.

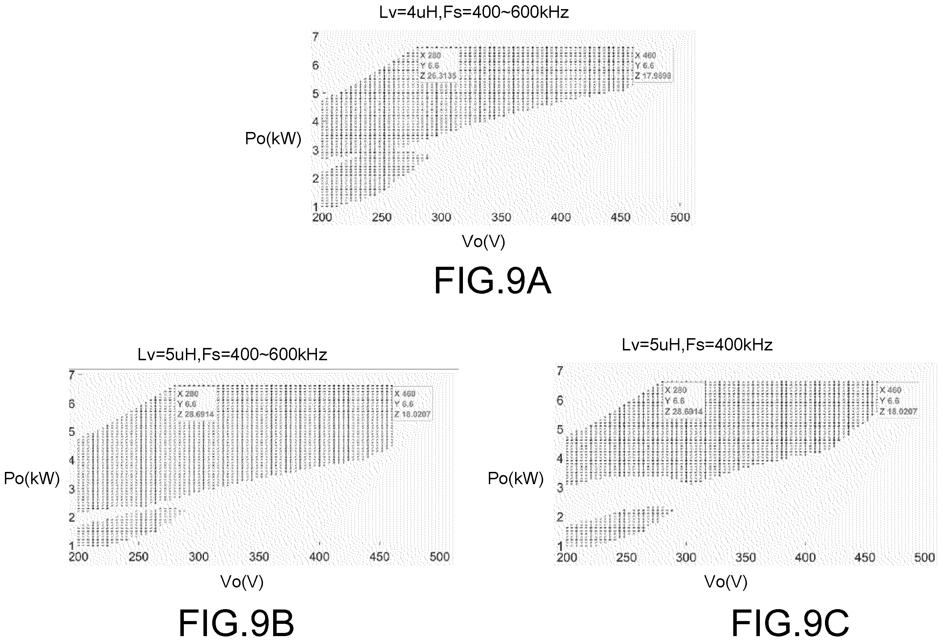

Please refer to FIG. 9A, which shows a zero-voltage switching interval distribution diagram acquired by performing the resonant converter using a simulation program and substituting the resonance parameter of a first embodiment according to the present disclosure; please refer to FIG. 9B, which shows a zero-voltage switching interval distribution diagram acquired by performing the resonant converter using the simulation program and substituting the resonance parameter of a second embodiment according to the present disclosure; please refer to FIG. 9C, which shows a zero-voltage switching interval distribution diagram acquired by performing the resonant converter using the simulation program and substituting the resonance parameter of a third embodiment according to the present disclosure, and also refer to FIG. 1Ato FIG. 8. In FIG. 9A to FIG. 9C, simulation programs such as MATLAB/Simulink are mainly used to perform the circuit structure of the resonant converter 100 (resonant conversion module 1) and the zero voltage switching (ZVS) interval distribution diagram illustrated by the parameters mentioned in FIG. 1A to FIG. 8 above, and the difference between FIG. 9A to FIG. 9C is only in the parameters. Specifically, in FIG. 9A, the inductance value Lv of the resonant inductor Lr1 is set to 4 µF, and the frequency range of the operating frequency Fs is 400 kHz to 600 kHz. FIG. 9B is similar to FIG. 9A, the only difference is that the inductance value Lv of the resonant inductor Lr1 is set to 5 µH, and FIG. 9C is similar to FIG. 9B, the only difference is that the operating frequency Fs is fixed at 400 kHz.

It can be seen from the interval in FIG. 9A that in the interval where the resonant converter 100 (resonant conversion module 1) outputs low power Po and low voltage Vo, the resonant converter 100 (resonant conversion module 1) can still operate under the zero voltage switching (ZVS) condition. On the other hand, comparing FIG. 9A and FIG. 9B, different inductance values Lv have respective advantages. When the inductor value Lv is 4 µH, although under the high power Po (or high voltage Vo) condition, the range of zero voltage switching (ZVS) is smaller. However, under the low power Po (or low voltage Vo) condition, the range of zero voltage switching (ZVS) is larger. The opposite is true when the inductor value is 5 µH, and therefore the circuit components may be configured according to the actual needs of the circuit. On the other hand, in FIG. 9C, the operating frequency Fs is fixed at 400kHz. Therefore, comparing FIG. 9B and FIG. 9C, when FIG. 9B is in the range of low power Po and low voltage Vo, the resonant converter 100 (resonant conversion module 1) can still have a larger zero-voltage switching (ZVS) range. Therefore, under the same inductance value Lv, a larger zero-voltage switching (ZVS) range can be acquired using the operation of frequency change so that the efficiency of the resonant converter 100 (resonant conversion module 1) can be better.

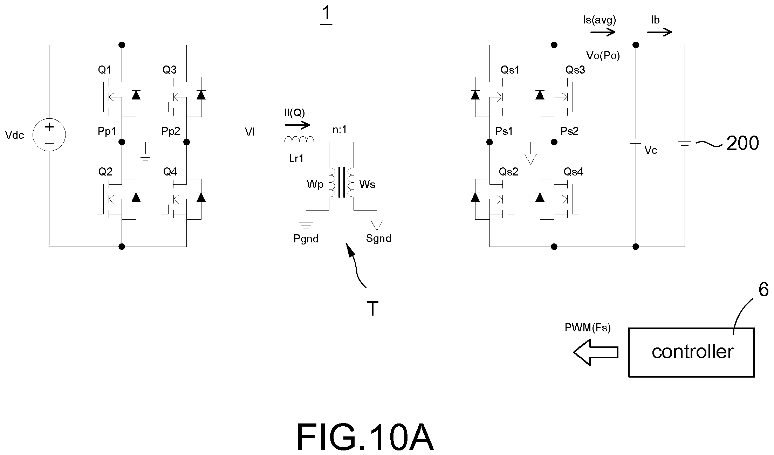

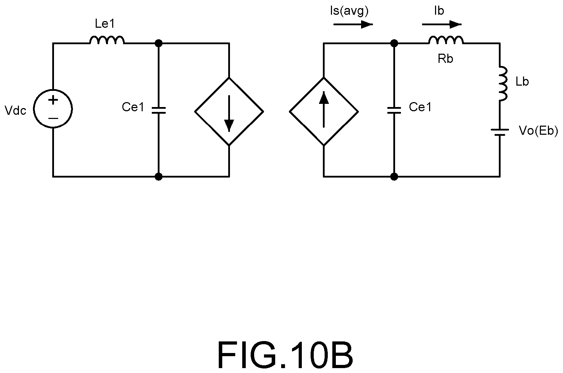

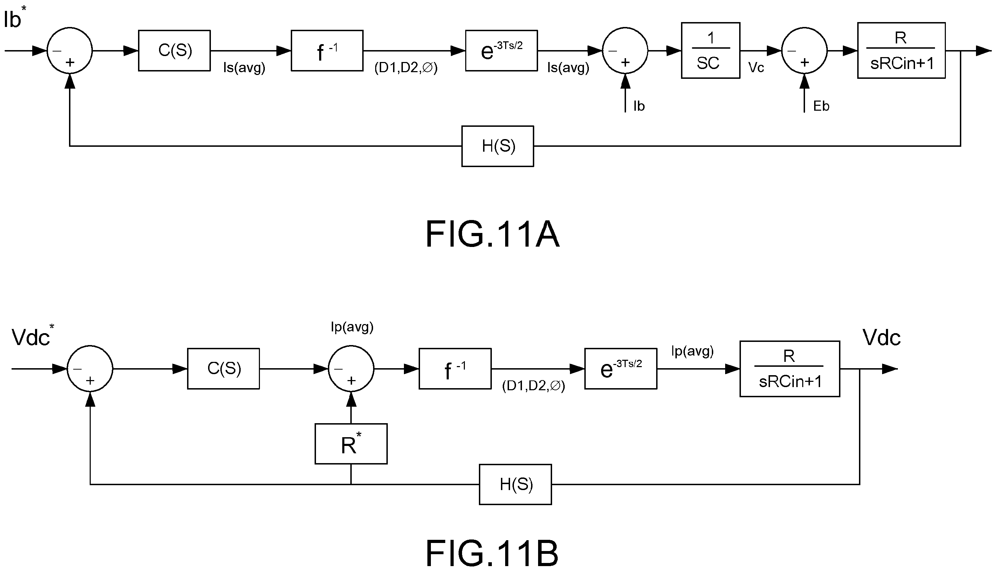

Please refer to FIG. 10A, which shows a block circuit diagram of the resonant conversion module of the resonant converter according to a second embodiment of the present disclosure, and also refer to FIG. 1A to FIG. 9C. The difference between FIG. 10A and FIG. 2A is that the resonant conversion module 1 has a dual active bridge circuit structure, and the main difference is that the resonant circuit B includes a transformer T and a resonant inductor Lr1. The rest of the circuit structure and coupling manners are the same as in FIG. 2A, and will not be described again here. In particular, the resonant circuit B of the resonant conversion module 1 in FIG. 10A may also include capacitors Cr1, Cr2 as shown in FIG. 2A, but their capacitance values are small (such as, but not limited to, several nF or pF). Therefore, if the capacitors Cr1, Cr2 are included, the capacitors Cr1, Cr2 do not participate in resonance, but are used as isolation DC capacitors (DC blocking capacitors). Please refer to FIG. 10B, which shows a simple equivalent circuit diagram of the resonant conversion module according to the second embodiment of the present disclosure. In FIG. 10B, Le is the equivalent inductance of the primary side, and Ce1, Ce2 are the equivalent capacitances of the primary side and the secondary side respectively. Furthermore, Lb is the equivalent inductance of the battery, Rb is the equivalent impedance of the battery, and Eb is the voltage of the battery. Please refer to FIG. 11A, which shows a control block diagram of a closed-loop system for charging a battery by the resonant conversion mode according to the second embodiment of the present disclosure. In the closed-loop system control block, since the charging mode is mainly to charge the battery, the voltage of the battery will increase or decrease as the battery capacity changes instead of being a constant value. Therefore, in the charging mode, the focus is on the control of the current Ib.

Furthermore, under the closed-loop control of the charging mode, the resonant converter 100 (resonant conversion module 1) enters the closed-loop control process of FIG. 7A and FIG. 11A, and can also enter the closed-loop control process of FIG. 8. Specifically, the current command Ib* is compared with the current Ib actually fed back to charge the battery, and the current Is(avg) that charges the capacitor Co is acquired. On the other hand, the phase shift amounts D1, D2, ψ can be calculated through the conversion equation, the average current Is (avg) and the current Ib can be calculated through the conversion equation to calculate the capacitor voltage Vc, and an error between the capacitor voltage Vc and the battery Eb of the battery is calculated to acquire the current Ib of charging the battery. In particular, in the above-mentioned closed-loop control operation, the stability of the resonant converter 100 is mainly increased by performing the first process (S500 to S560). Moreover, after confirming that the resonant converter 100 (resonant conversion module 1) operates in a steady state, the second process (S600 to S680) is performed to increase the operating efficiency of the resonant converter 100. When the resonant converter 100 (resonant conversion module 1) operates in a transient state, the resonant converter 100 (resonant conversion module 1) has usually just started or an abnormal state has occurred. At this time, the detected values may be abnormal (for example, but not limited to, the operating frequency Fs and the current Ib change significantly), so the control of the resonant converter 100 needs to be stabilized as quickly as possible through the first process (S500 to S560). At this time, the detected value will be abnormal (for example, but not limited to, the operating frequency Fs and the current Ib change significantly), and therefore it is necessary to stabilize the control of the resonant converter 100 as quickly as possible through the first process (S500 to S560). Moreover, when it is confirmed that the resonant converter 100 (resonant conversion module 1) operates in a steady state, the second process (S600 to S680) is performed.

Please refer to FIG. 11B, which shows a control block diagram of the closed-loop system for discharging the battery by the resonant conversion mode according to the second embodiment of the present disclosure, and also refer to FIG. 1A to FIG. 11A. In the closed-loop control, since the discharging mode is that the battery discharges the power terminal (i.e., the DC voltage Vdc terminal) of the resonant converter 100 (resonant conversion module 1), the DC voltage Vdc at the power terminal is regarded as a load, which represents the equivalent resistance of the simulated inverter fed into the power supply end, and changes in the load will have a great impact on the stable time. Therefore, the DC voltage Vdc at the power terminal is a constant value, and the difference is the primary-side current Ip(avg) drawn. Therefore, in the discharging mode, the focus is on the control of the DC voltage Vdc.

Specifically, when the resonant converter 100 (resonant conversion module 1) is under closed-loop control in the discharging mode, the voltage command Vdc* is compared with the actual DC voltage Vdc at the power terminal, and the primary-side current Ip (avg) extracted from the power terminal and the phase shift amounts D1, D2, ψ can be calculated through conversion equations. Therefore, the DC voltage Vdc can be acquired to form the closed-loop control of FIG. 11B. Since load changes will have a great impact on the stable time, the present disclosure further adds a feedforward loop to increase the stability of the closed-loop control. As shown in FIG. 11B, 1/R* is the compensation amount, R* = (2Vdc^2/Vm*Im), and Vm and Im are the excitation voltage and the excitation current of the transformer T respectively.

Specifically, the compensation amount is the value estimated by the feedforward loop, which helps cancel changes in the load. Moreover, the main purpose of providing the compensation amount in advance is that when the controller 6 adjusts other parameters, there is no need to compensate too much at one time so that the closed-loop control of the discharging mode can be made more stable. Therefore, the controller 6 can first confirm whether the mode of charging and discharging the battery of the resonant converter 100 (resonant conversion module 1) is the discharging mode, and when it is confirmed to be the discharging mode, the compensation amount 1/R* is provided according to the DC voltage. Afterward, the voltage command Vdc* is set, the second error amount is calculated according to the DC voltage Vdc and the voltage command Vdc*, and the primary-side current Ip(avg) is calculated according to the two error amounts. Finally, the sum of the primary-side current Ip(avg) and the pre-provided compensation amount 1/R* is the second error amount, and the DC voltage Vdc is adjusted according to the second error amount.

Accordingly, the resonant converter 100 of the present disclosure can be mainly composed of more than one resonant conversion module 1, which enables the resonant converter 100 to handle high power through the parallel connection of the resonant conversion modules 1. In addition, the present disclosure mainly uses interleaved control technology to control the resonant conversion module 1 to reduce the current stress of the input filter modulated by the switching power supply (SPS). The reason is that interleaved control has the effect of ripple current cancellation, which can reduce ripple current and thereby reduce the size of filter components.

## Claims

1. A method for parameter calculation of a resonant converter (100) to acquire a resonance parameter of the resonant converter (100), **characterized in that** the method comprising steps of:
setting a predetermined operating condition of the resonant converter (100), wherein the predetermined operating condition comprises a specific frequency range of an operating frequency (Fs) of the resonant converter (100),
calculating a plurality of first resonance parameters in the specific frequency range, wherein the plurality of first resonance parameters comprise a turns ratio (n, N) of a transformer (T) of the resonant converter (100),
acquiring a first resonance parameter in which a current ripple (Q) of a resonant inductor (Lr1, Lr2) of the resonant converter (100) is a minimum value in the plurality of first resonance parameters, and
calculating a plurality of second resonance parameters according to the turns ratio (n, N) of the first resonance parameter and the predetermined operating condition, and selecting one of the second resonance parameters as the resonance parameter.

2. The method for parameter calculation of the resonant converter (100) as claimed in claim 1, wherein the second resonance parameter comprises an inductance value (Lv, Lv1, Lv2) of the resonant inductor (Lr1, Lr2) and a capacitance value (Cv, Cv1, Cv2) of a resonant capacitor (Cr1, Cr2).

3. The method for parameter calculation of the resonant converter (100) as claimed in claim 1, further comprising steps of:
(a) confirming a current (Ib) at a device terminal of the resonant converter (100), and calculating a phase shift amount (D1, D2, ψ) of the resonant converter (100) according to the current (Ib),
(b) confirming an operating frequency (Fs) corresponding to a voltage (Vo) and a power (Po) at the device terminal through a first parameter comparison table (7, 7A, 7B),
(c) adjusting a pulse width modulation signal of controlling the resonant converter (100) through the phase shift amount (D1, D2, ψ) and the operating frequency (Fs),
(d) confirming a phase shift amount (D1, D2, ψ) and an operating frequency (Fs) of the resonant converter (100), and confirming whether the phase shift amount (D1, D2, ψ) and the operating frequency (Fs) are within a predetermined range,
(e) confirming a dead time corresponding to a voltage and a power at the device terminal of the resonant converter (100) through a second parameter comparison table (7, 7A, 7B) when the phase shift amount (D1, D2, ψ) and the operating frequency (Fs) are both within the predetermined range, and
(f) adjusting a pulse width modulation signal (PWM) of controlling the resonant converter (100) through the dead time.

4. The method for parameter calculation of the resonant converter (100) as claimed in claim 3, further comprising steps of:
setting a current command (Ib*), and calculating a secondary-side average current (Is(avg)) according to a first error difference between the current (Ib) and the current command (Ib*), and
calculating the phase shift amount (D1, D2, ψ) according to the secondary-side average current (Is(avg)).

5. The method for parameter calculation of the resonant converter (100) as claimed in claim 3, further comprising steps of:
conforming a frequency value (Fv) corresponding to the voltage (Vo) and the power (Po) by the first parameter comparison table (7, 7A, 7B),
filtering the frequency value (Fv) to acquire the operating frequency (Fs), and
converting the phase shift amount (D1, D2, ψ) into a delay time by a value-time conversion, and adjusting the pulse width modulation signal (PWM) according to the delay time.

6. The method for parameter calculation of the resonant converter (100) as claimed in claim 3, wherein the resonant converter (100) comprises a switching circuit (4) on a primary side and a secondary-side switch circuit (5) on a secondary side; the phase shift amount (D1, D2, ψ) comprises a first phase shift amount (D1, D2, ψ) of the switching circuit (4), a second phase shift amount (D1, D2, ψ) of the secondary-side switch circuit (5), and a third phase shift amount (D1, D2, ψ) between the switching circuit (4) and the secondary-side switch circuit (5).

7. The method for parameter calculation of the resonant converter (100) as claimed in claim 3, wherein the resonant converter (100) comprises a switching circuit (4) on a primary side and a secondary-side switch circuit (5), the method further comprises steps of:
confirming a primary-side dead time of the switching circuit (4) and a secondary-side dead time of the secondary-side switch circuit (5) through the second parameter comparison table (7, 7A, 7B) when the phase shift amount (D1, D2, ψ) and the operating frequency (Fs) are both within the predetermined range, and
setting the dead time to a default value when one of the phase shift amount (D1, D2, ψ) and the operating frequency (Fs) is not within the predetermined range.

8. The method for parameter calculation of the resonant converter (100) as claimed in claim 3, wherein the device terminal of the resonant converter (100) is coupled to a battery, and the battery is charged and discharged, the method further comprising steps of:
confirming whether the resonant converter (100) operates in a steady state, and
performing step (d) when the resonant converter (100) operates in the steady state.

9. The method for parameter calculation of the resonant converter (100) as claimed in claim 3, wherein the device terminal of the resonant converter (100) is coupled to a battery, and the battery is charged and discharged, the method further comprising steps of:
confirming that a charged/discharged mode of the battery is a constant-power charging mode (CP), and
performing step (a), or
confirming that the charged/discharged mode of the battery is a discharging mode,
providing a compensation amount (1/R*) according to a DC voltage (Vdc) at a power terminal of the resonant converter (100),
setting a voltage command (Vdc*), and calculating a primary-side current (Ip(avg)) according to the DC voltage (Vdc) and the voltage command (Vdc*), and
summing the primary-side current (Ip(avg)) and the compensation amount (1/R*) to be a second error amount, and adjusting the DC voltage (Vdc) according to the second error amount.

10. A resonant converter (100) applied to a method for parameter calculation in claim 1, **characterized in that** the resonant converter (100) comprising:
a primary-side circuit (A) coupled to a DC power source,
a resonant circuit (B) comprising a plurality of transformers (T), a plurality of primary-side windings (Wp) of the plurality of transformers (T) coupled to the primary-side circuit (A), and
a secondary-side circuit (C) comprising a plurality of secondary-side switch circuits (5), each secondary-side switch circuit (5) comprising a first secondary-side bridge arm (52) and a second secondary-side bridge arm (54),
wherein the first secondary-side bridge arms (52) and the second secondary-side bridge arms (54) of the secondary-side switch circuits (5) are respectively coupled to two terminals of a plurality of secondary-side windings (Ws) of the plurality of transformers (T), and the plurality of secondary-side switch circuits (5) are coupled to a device (200) in parallel.

11. The resonant converter (100) as claimed in claim 10, wherein the primary-side circuit (A) comprises:
a plurality of switching circuits (4), each switching circuit (4) comprising a first switching bridge arm (42) and a second switching bridge arm (44), and the first switching bridge arms (42) and the second switching bridge arms (44) respectively coupled to two terminals of the plurality of primary-side windings (Wp) of the plurality of transformers (T).

12. The resonant converter (100) as claimed in claim 10, wherein the plurality of switching circuits (4) are coupled to the DC power source in parallel or coupled to the DC power source in series.

13. The resonant converter (100) as claimed in claim 10, wherein the plurality of switching circuits (4) are coupled to the DC power source in parallel, and resonant inductors (Lr1, Lr2) of the resonant circuit (B) form a common core structure.

14. The resonant converter (100) as claimed in claim 10, wherein the primary-side circuit (A) comprises:
a switching circuit (4) comprising a first switching bridge arm (42) and a second switching bridge arm (44), and the plurality of primary-side windings (Wp) of the plurality of transformers (T) coupled in series to form a primary-side winding string,
wherein the first switching bridge arm (42) and the second switching bridge arm (44) are respectively coupled to two terminals of the primary-side winding string.

15. The resonant converter (100) as claimed in claim 14, wherein the switching circuit (4) further comprises a third switching bridge arm (46) connected in parallel; the plurality of transformers (T) form a center tap terminal (Pc) between two primary-side windings (Wp), and the third switching bridge arm (46) coupled to the center tap terminal (Pc).
